# FASCICULE DE BREVET EUROPEEN

(11) **EP 0 763 320 B1**
(45) Date de publication et mention de la délivrance du brevet: **27.12.2000**
(21) Numéro de dépôt: 96390011.3
(22) Date de dépôt: 06.09.1996
(51) Int. Cl.: A01D 45/00

(54) **Machine pour la recolte de fruits ronds ou oblongs du type cornichon**
Maschine zum Ernten von runder oder oblonger Früchten wie Gurken
Machine for harvesting round or oblong fruit such as cucumbers

(30) Priorité: 08.09.1995 FR 9510739
(43) Date de publication de la demande: 19.03.1997
(73) Titulaire: G.I.E. "Remecor", 75008 Paris (FR); Cemagref - Group. de Montpellier, 34033 Montpellier Cédex 1 (FR)
(72) Inventeur: Rombaut, Marc, 34820 Teyran (FR)
(74) Mandataire: Ravina, Bernard

(56) Documents cités:
- DE-A- 1 582 214
- FR-A- 2 410 951
- FR-A- 2 425 194
- NL-A- 7 808 024
- US-A- 3 416 298
- LANDTECHNIK, vol. 30, no. 9, Septembre 1975, pages 382-386, XP002005171 KROMER: "EINMALERNTE VON FRUCHTGEMÜSE"

## Description

La présente invention a pour objet une machine pour récolter des fruits ronds ou oblongs, par exemple des cornichons. Elle vise plus particulièrement une machine permettant la récolte des cornichons par arrachage des plantes qui les portent, après quoi on les secoue pour en détacher les cornichons. Ces derniers sont alors transférés dans un réceptacle approprié tandis que les plantes débarrassées de leurs fruits sont rejetées sur le sol.

Actuellement, les cornichons sont cueillis à la main au fur et à mesure de leur mûrissement, si bien que pour chaque parcelle cultivée, la cueillette s'étale sur une période d'un mois à un mois et demi. Du point de vue bio agronomique, en vue de rationaliser la récolte, ont été créées de nouvelles variétés de cornichons. Ces nouveaux cornichons parviennent ensemble à maturité, ce qui autorise la cueillette en une seule passe à l'aide d'une machine de récolte.

Les machines connues dans l'art antérieur pour la récolte des cornichons, comportent des moyens d'arrachage des plantes et ensuite des moyens pour en détacher les cornichons. Habituellement ces derniers sont recueillis dans un réceptacle approprié tandis que les plantes sont rejetées sur le sol. De telles machines ne donnent toutefois pas satisfaction dans la mesure où les cornichons sont meurtris par le système de préhension des plantes, d'une part, et que, d'autre part, s'il est très aisé de se débarrasser des déchets les plus importants, il est relativement difficile d'opérer une sélection entre les cornichons et les menus déchets. Par ailleurs, ces machines sont conçues spécifiquement pour la récolte des cornichons de gros calibre (30 à 60 mm de diamètre) et sont d'un rendement relativement faible lorsqu'elles sont utilisées pour la récolte de cornichons de petits calibres.

Un des objets de la présente invention est d'obvier à cet inconvénient des machines de la technique antérieure, en fournissant une machine comportant un poste d'arrachage des plantes et de transport de ces dernières vers un poste de secouage, au niveau duquel s'opère la séparation des cornichons de leurs plantes porteuses.

Un autre objet de la présente invention est de fournir une machine permettant de séparer les cornichons de leurs plantes porteuses, en éliminant la quasi-totalité des déchets végétaux et sans abîmer pour cela les cornichons.

La présente invention a donc pour objet une machine pour la récolte de fruits ronds ou oblongs à partir des plantes porteuses, en se débarrassant ainsi simultanément de la plante porteuse et des autres déchets végétaux adventices, cette machine comportant un poste d'arrachage des plantes porteuses et de transport de ces dernières à un poste de secouage des plantes arrachées, et étant caractérisée en ce que le poste de secouage comporte un élément oscillant supérieur coopérant avec un élément oscillant inférieur de façon à définir un canal de secouage et que ce canal de secouage est animé d'un mouvement oscillatoire autour d'une position médiane inclinée vers le sol, l'élément oscillant inférieur étant agencé de façon à limiter un certain nombre d'orifices d'évacuation des fruits par exemple les cornichons.

La machine selon l'invention est en outre remarquable par les points suivants :
- Le canal de secouage est plus large à l'entrée qu'à la sortie.
- Le poste d'arrachage est constitué de deux tapis ondulés en relation de pressage l'un contre l'autre et montés chacun sur trois chaînes sans fin, ces tapis étant réglés de façon à saisir les plantes tout en évitant un endommagement des fruits.
- Les axes géométriques d'oscillation des éléments oscillants se trouvent chacun dans un plan parallèle au sol. De préférence les axes géométriques sont perpendiculaires au sens d'avancement de la machine.
- Le canal, défini par les éléments oscillants supérieur et inférieur, présente une inclinaison vers le sol en position médiane.
- Le canal, défini par les éléments oscillants supérieur et inférieur, se rétrécit progressivement depuis l'entrée vers la sortie.
- Les éléments oscillants, supérieur et inférieur, sont constitués de battes élastiquement flexibles, la rangée de battes constituant l'élément inférieur, définissant une grille dont l'écartement est dimensionné pour que les cornichons s'écoulent par gravité vers un poste de transfert.
- Les éléments oscillants, supérieur et inférieur, sont articulés au bâti de la machine et sont actionnés en oscillation par l'intermédiaire d'au moins un mécanisme moteur d'actionnement, comprenant un élément à déplacement alternatif, solidarisé par une articulation à l'un des éléments oscillants, l'élément oscillant inférieur étant accouplé à l'élément oscillant supérieur par un bras de transmission.
- Les points d'articulation des éléments oscillants supérieur et inférieur au bâti de la machine et les points d'articulation du bras de transmission audits éléments oscillants, forment un quadrilatère déformable, par exemple un trapèze isocèle déformable.
- L'élément à déplacement alternatif du mécanisme d'actionnement de l'élément oscillant supérieur et le bras de transmission, entre les deux éléments oscillants, sont tous deux ajustables en longueur de façon à permettre le réglage de l'inclinaison de l'axe longitudinal du canal selon la position médiane et le réglage de la valeur de l'écart minimal entre les extrémités avant des éléments oscillants.
- La distance entre l'axe de pivotement de l'élément oscillant supérieur et l'articulation de l'élément à déplacement alternatif à l'élément oscillant supérieur est ajustable afin de régler tant l'amplitude du mouvement d'oscillation dudit élément que sa vitesse et son accélération,
- La distance entre l'axe d'oscillation de l'élément oscillant supérieur et l'articulation du bras de transmission audit élément oscillant supérieur d'une part et la distance entre l'axe d'oscillation de l'élément oscillant inférieur et le point d'articulation du bras de transmission audit élément oscillant inférieur sont ajustables, afin de régler l'amplitude du mouvement oscillant de l'élément oscillant inférieur ainsi que sa vitesse et accélération.
- Les battes des éléments oscillants inférieur et supérieur sont orientées dans le sens de la progression des plantes dans le canal et au moins les battes de l'élément inférieur présentent un écart prédéterminé pour retenir les plantes et permettre le passage des cornichons.

D'autres caractéristiques et buts de l'invention apparaîtront à la lecture de la description suivante de formes préférées de réalisation de la machine selon l'invention, données à titre d'exemple non-limitatif, en se référant aux dessins annexés dans lesquels :
- la figure 1 est une vue latérale schématique de la machine à ramasser les cornichons, selon la présente invention,
- la figure 2 est une vue en perspective de la machine de la figure 1,

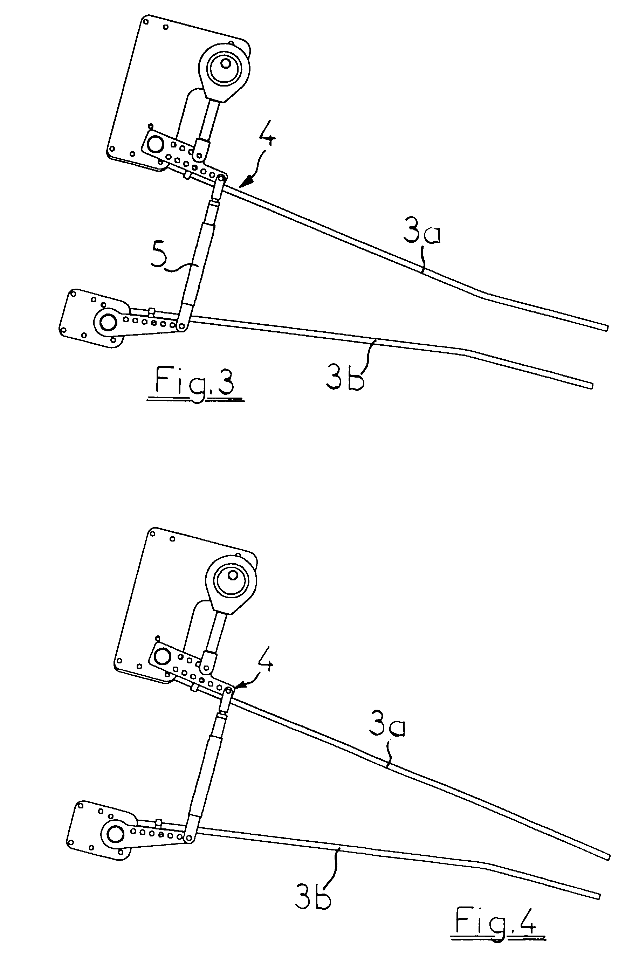

- les figures 3 et 4 montrent des battes selon une autre forme de réalisation,
- la figure 5 montre une machine avec dispositif additionnel de triage.

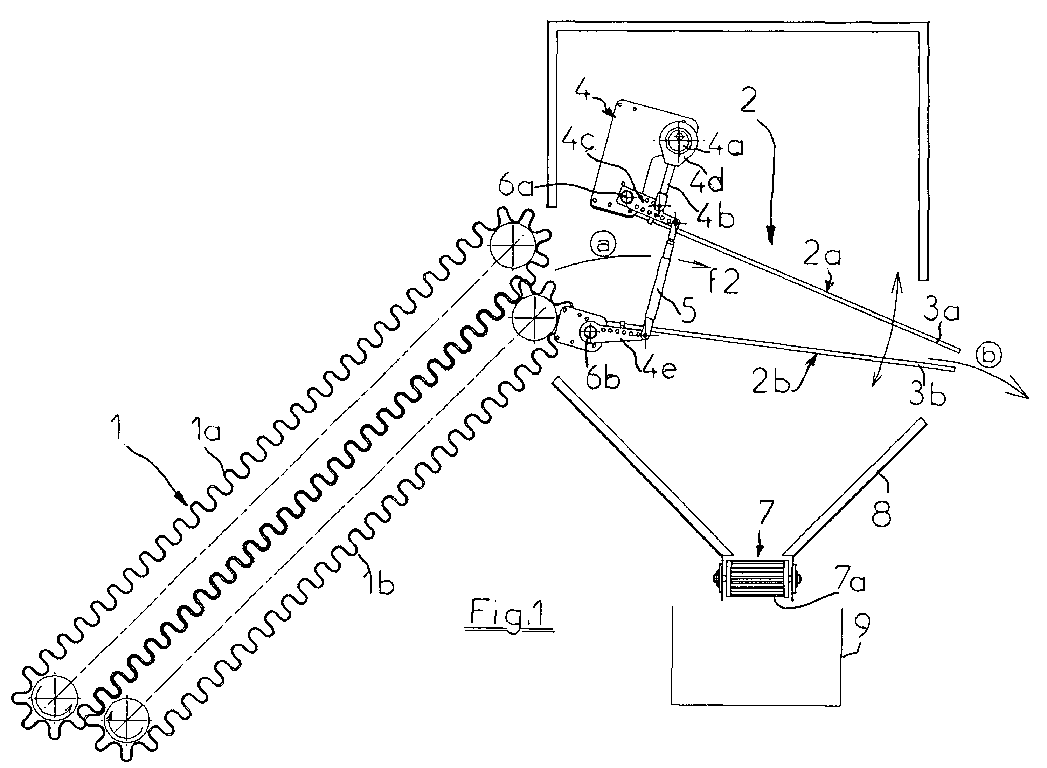

Comme représentée dans la forme de réalisation de la figure 1, la machine à ramasser les cornichons comporte sur un châssis, un dispositif d'arrachage 1 qui arrache les plantes et les transfère depuis le sol vers un niveau supérieur selon lequel est disposé le poste de secouage 2.

Le dispositif d'arrachage 1, avec bâti porteur non représenté, est constitué de deux tapis sans fin 1a, 1b inclinés vers le sol, disposés l'un au-dessus de l'autre, tournant en sens inverse l'un de l'autre et à la même vitesse et agencés pour venir en relation de pressage l'un contre l'autre. Les parties en contact l'une avec l'autre de ces deux tapis, sont animées d'un mouvement ascendant afin de saisir les plantes porteuses de cornichons, de les arracher, ce qui évite cette opération dans un stade ultérieur, et de les acheminer vers un niveau supérieur.
De préférence ces tapis 1a, 1b sont ondulés, les ondulations de l'un venant dans les ondulations de l'autre. Ces deux tapis sont montés chacun sur trois chaînes sans fin, non représentées, dont une est médiane et les deux autres latérales. Ces chaînes sont elles-mêmes montées chacune en tension entre un pignon mené, non représenté, fixé sur arbre mené horizontal non représenté, et un pignon menant non représenté, fixé sur un arbre menant horizontal non représenté. Les arbres mené et menant sont communs respectivement aux pignons menés et aux pignons menants et sont montés chacun en rotation, par leurs deux extrémités, dans des paliers non représentés, fixés au bâti du dispositif d'arrachage.

L'arbre menant de chaque tapis est actionné par un moyen moteur. Ce moyen moteur peut être constitué par un moteur électrique, hydraulique ou pneumatique, du type de ceux comprenant un arbre de prise de puissance rotatif sur lequel un couple est disponible. Cet arbre sera accouplé par l'intermédiaire d'une transmission de mouvement appropriée, avec les arbres menants des tapis ondulés.

Le poste de secouage 2, porté par le châssis de la machine, est alimenté en plantes par le dispositif d'arrachage et comporte un canal de secouage prévu avec un orifice (a) d'introduction des plantes avec leurs cornichons, disposé en regard de l'extrémité supérieure du dispositif d'arrachage. À l'opposé, selon son axe longitudinal, le canal comporte un orifice (b) d'évacuation des plantes débarrassées de leurs cornichons. Préférentiellement le canal de secouage est plus large à l'entrée (a) qu'à la sortie (b).

Le canal de secouage est monté mobile autour d'un axe parallèle au sol, perpendiculaire à l'axe longitudinal, situé dans le plan de l'orifice d'entrée (a) et est entraîné en oscillation par au moins un mécanisme d'actionnement 4 prévu avec un élément à déplacement alternatif 4b autour d'une position médiane, cet élément étant solidaire du canal. De part cette configuration, l'amplitude du mouvement d'oscillation du canal est progressivement croissante depuis l'entrée (a) de ce canal vers sa sortie (b). Ce mouvement d'oscillation, d'amplitude croissante, est communiqué à la masse de plantes introduite dans le canal et progressant dans ce dernier vers l'orifice de sortie (b). Le secouage de la masse de plante introduit un effet de flexions alternées aux pédoncules des cornichons, entraînant le détachement de chaque cornichon du reste de sa plante porteuse.

De préférence la fréquence du mouvement d'oscillation est ajustable.

De préférence, le canal est entraîné en oscillation de part et d'autre d'une position médiane selon laquelle il est incliné vers le sol. Toujours selon la forme préférée de réalisation, l'axe d'oscillation du canal est perpendiculaire au sens d'avancement de la machine.

Le dispositif oscillant que forme le poste de secouage 2, est constitué d'un élément supérieur oscillant 2a et d'un élément inférieur oscillant 2b définissant tous deux le canal de secouage oscillant sus évoqué. L'élément supérieur oscillant, par son extrémité arrière, celle correspondant à l'orifice d'introduction (a) des plantes dans le canal, est situé légèrement au-dessus de l'extrémité supérieure du poste d'arrachage tandis que l'élément inférieur oscillant, par son extrémité arrière, est situé légèrement en dessous de l'extrémité supérieure du poste d'arrachage.

Les éléments oscillants 2a, 2b, par leur extrémité arrière, sont montés chacun en oscillation selon un axe géométrique parallèle au sol, perpendiculaire à l'axe longitudinal du canal, contenu dans le plan de l'orifice d'entrée et sont entraînés chacun en oscillation de part et d'autre d'une position médiane, par un même mécanisme moteur d'actionnement 4, décrit plus loin. Les axes d'oscillation des deux éléments sont parallèles entre eux et de préférence, ces derniers sont perpendiculaires au sens d'avancement de la machine.

Au moins l'élément inférieur oscillant 2b est pourvu, entre l'entrée du canal et la sortie du canal, sur le trajet des plantes dans ce canal, de plusieurs orifices, par lesquels les cornichons détachés des plantes par le secouage, peuvent s'évacuer par gravité vers un dispositif de récupération et de transfert. Ces orifices d'évacuation sont suffisamment importants pour le passage des cornichons et suffisamment faibles pour s'opposer aux passage des plantes. De préférence, ces caractéristiques techniques sont reproduites sur l'élément oscillant supérieur.

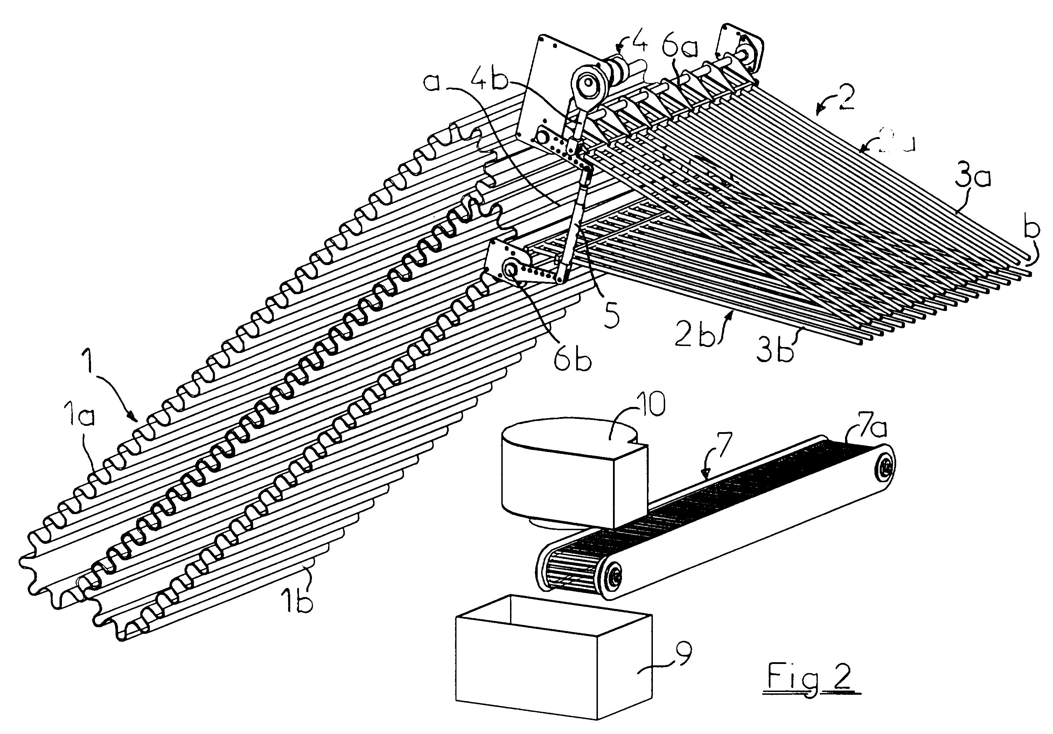

Comme on peut le voir sur les figures 1 et 2 le canal de secouage se rétrécit progressivement depuis l'orifice d'introduction des plantes vers l'orifice de sortie afin de créer un étranglement qui ralentit la progression des plantes dans le canal en sorte que ces dernières, dans le canal, subissent un nombre suffisant de secouages. De surcroît, grâce à cette disposition, la masse de plantes dans le canal est parfaitement maintenue par les éléments 2a et 2b et se trouve guidée dans son mouvement d'oscillation, par ces éléments et ce notamment, dans la partie du canal soumise aux plus grandes amplitudes d'oscillation. Ainsi, la masse de plantes ne peut ballotter dans le canal, au moins dans les parties de ce dernier soumises aux plus grandes amplitudes, ce qui écarte les risques d'endommagement des cornichons. Selon cette configuration, les éléments oscillants se développent de manière oblique l'un par rapport à l'autre. En variante, les éléments oscillants sont parallèles l'un par rapport à l'autre et l'axe longitudinal du canal de secouage, lorsque le dit canal est disposé selon la position médiane présente une inclinaison vers le sol, moins importante de façon à garder la masse de plantes plus longtemps dans ledit canal.

Chaque élément oscillant 2a, 2b se développe sensiblement selon un plan géométrique et est constitué par exemple d'une rangée de battes 3a, 3b, portée, selon l'une de ses extrémités, celle correspondant à l'orifice d'introduction des plantes, par un support oscillant doté selon l'axe d'oscillation dudit élément, d'un arbre d'oscillation 6a, 6b, horizontal, monté en guidage par ses extrémités, dans deux paliers fixés au châssis de la machine.

Le support oscillant reçoit en encastrement la partie arrière des battes 3a, 3b et est constitué, par exemple, par deux traverses parallèles à l'arbre d'oscillation, écartées l'une de l'autre et portées par une série de platines fixées à l'arbre d'oscillation. En regard l'une de l'autre, selon le plan de l'élément oscillant, les deux traverses sont pourvues d'orifices traversants dans lesquels s'engagent en fixation les portions arrières des battes 3a, 3b.

Les battes 3a, 3b s'étendent parallèlement à l'axe longitudinal du canal et sont formées chacune, par exemple, par une tige de section droite circulaire ou autre, mais ne présentant pas d'angle vif pouvant blesser les fruits. De préférence, chaque batte est en fibre de verre mais toute autre matière appropriée, élastiquement flexible, pourra être utilisée.

Ces battes peuvent donc se déformer élastiquement en flexion sur la masse de plantes progressant dans le canal, ce qui diminue encore les risques d'endommagement des cornichons.

Les battes 3b de l'élément oscillant inférieur 2b sont disposées de façon à présenter entre elles un écart prédéterminé permettant de retenir les plantes mais suffisant pour permettre le passage des cornichons. L'écart entre deux battes consécutives détermine un orifice d'évacuation des cornichons vers le dispositif de transfert 7, 8. De préférence, cette caractéristique technique est reproduite pour les battes 3a de l'élément oscillant supérieur.

Selon la forme préférée de réalisation les battes 3a et 3b se développent chacune de manière rectiligne.
En variante les battes 3b et/ou 3a présentent chacune deux tronçons rectilignes réunis par une pliure, l'angle saillant formé étant orienté vers l'intérieur du canal de secouage.
Selon une autre variante, les battes (3a), (3b) sont curvilignes.

Selon la forme préférée de réalisation, le mécanisme d'actionnement en oscillation des éléments oscillants 2a et 2b comprend un système à excentrique dont le plateau 4a est accouplé à l'arbre de sortie rotatif d'un organe moteur d'actionnement en rotation autour d'un axe géométrique parallèle aux axes d'oscillation des éléments 2a, 2b et dont la barre 4b, constituant l'élément à déplacement alternatif, est solidarisée par une articulation à un levier radial 4c de l'élément oscillant supérieur 2a, fixé à l'arbre d'oscillation 6a dudit élément. Par sa tête, la barre d'excentrique 4b est fixée par tout moyen connu au collier 4d d'excentrique. Le mécanisme d'actionnement comprend en outre un bras de transmission 5 de mouvement, articulé d'une part au levier 4c et d'autre part à un levier radial 4e de l'élément inférieur 2b, fixé à l'arbre d'oscillation 6b dudit élément inférieur 2b.

Les axes d'oscillation des éléments 2a et 2b et les points d'articulation du bras 5 aux leviers 4c et 4e définissent un quadrilatère déformable qui est constitué, sans que cela soit limitatif, par un trapèze isocèle déformable (cas où les éléments 2a, 2b sont obliques l'un par rapport à l'autre) ou un parallélogramme déformable (cas où les éléments 2a, 2b sont parallèles l'un à l'autre).

Avantageusement, la longueur de la barre d'excentrique 4b est ajustable, ce qui autorise le réglage de l'inclinaison de l'axe longitudinal du canal selon la position médiane. La longueur du bras de transmission 5 est également réglable afin d'ajuster la valeur de l'écart minimal entre les extrémités avant des éléments oscillants 2a et 2b.

En outre, la distance entre l'axe de pivotement de l'élément supérieur 2a et l'articulation de la barre d'excentrique au levier 4c est ajustable ce qui permet de régler tant l'amplitude du mouvement d'oscillation de l'élément 2a que la vitesse et l'accélération. À cet effet, le levier 4c comporte plusieurs orifices traversants alignés en rang dans chacun desquels est susceptible d'être logé l'axe d'articulation de la barre 4c. De la même façon, la distance entre l'axe d'oscillation de l'élément 2a et l'articulation du bras 5 au levier 4c d'une part et la distance entre l'axe d'oscillation de l'élément 2b et le point d'articulation du bras 5 au levier 4e d'autre part sont ajustables, ce qui permet le réglage de l'amplitude du mouvement oscillant de l'élément 2b ainsi que la vitesse et l'accélération.

De part cette caractéristique, à l'un des éléments oscillants 2a, 2b, par exemple l'élément inférieur 2b, peut être appliquée une accélération plus importante que celle appliquée à l'autre élément, par exemple, l'élément supérieur.

Comme décrit précédemment, pour ajuster les distances sus évoquées, les leviers 4c et 4e comporteront chacun plusieurs perçages traversants disposés en rang.

Dans l'un des perçages du levier 4c, en fonction du réglage choisi, sera disposé l'axe d'articulation du bras 5 et dans l'un des perçages du levier 4e, toujours en fonction du réglage choisi, sera disposé l'autre axe d'articulation du bras 5.

On vient de décrire un mécanisme d'actionnement du type comportant un système à excentrique mais il va de soi que tout autre type de mécanisme approprié pourra être utilisé. Ainsi le moyen d'actionnement, en remplacement du système à excentrique, pourra être équipé d'un actionneur linéaire double effet, asservi, tel que par exemple un servo-vérin hydraulique ou pneumatique ou électrique. On pourra prévoir également deux moyens d'actionnement dont un actionnera en oscillation l'élément supérieur 2a et l'autre, l'élément inférieur 2b.

Le poste de secouage est recouvert tant par le dessus que latéralement, à distance des éléments oscillants, par un capot avec capitonnage interne. Ce capot à pour but d'arrêter les cornichons projetés par les éléments oscillants 2a, 2b et d'éviter que ces derniers ne soient rejetés vers l'extérieur de la machine.

Sous le poste de secouage 2, est disposée la partie amont du dispositif de transfert des cornichons vers un réceptacle 9. Comme représenté sur les dessins, plus particulièrement sur la figure 2, le dispositif de transfert comprend une trémie 8 avec capitonnage interne disposée par son orifice supérieur, sous le poste de secouage pour récupérer les cornichons s'écoulant au travers des orifices des éléments inférieur et supérieur oscillants d'une part et s'écoulant au travers de passages latéraux ménagés entre les éléments oscillants et les flans latéraux du capot de recouvrement d'autre part. Le dispositif de transfert comprend également un tapis roulant 7, de convoyage des cornichons, disposé par sa partie amont sous l'orifice amont de la trémie et par sa partie aval au-dessus du réceptacle 9 afin de récupérer les cornichons s'écoulant de l'orifice inférieur de la trémie et de les déverser dans le réceptacle 9. De préférence, ce tapis s'étend transversalement au sens de déplacement de la machine.

Le tapis 7 est ajouré pour l'évacuation de la terre et des menus déchets. Ce tapis 7 est avantageusement constitué de barrettes 7a régulièrement espacées et supportées par deux chaînes sans fin montées chacune en tension entre un pignon mené fixé à un arbre mené et un pignon menant fixé à un arbre menant. L'arbre mené est commun aux deux pignons menés et l'arbre menant est commun aux deux pignons menants. Les arbres menés et menants sont montés chacun par leurs extrémités dans deux paliers fixés au bâti du dispositif de transfert. L'arbre menant est accouplé à l'arbre de sortie rotatif d'un organe moteur d'actionnement, non représenté, fixé au châssis de la machine.

Est également prévu un aspirateur broyeur 10 pour le nettoyage de la récolte. Cet aspirateur broyeur est monté au-dessus de l'extrémité aval du tapis sans fin 7 et plus précisément au-dessus de la chute des cornichons dans le réceptacle 9. Cet aspirateur broyeur, réglable en hauteur et réglable en régime à pour rôle l'aspiration des déchets végétaux transportés par le tapis 7 et le broyage de ces derniers avant rejet sur le sol, les cornichons, bien plus lourd n'étant pas aspirés.

En variante, pourra être prévu un ventilateur souffleur générant une veine d'air passant de bas en haut au travers de la zone aval du tapis et dans l'axe de la veine d'air, au-dessus du tapis, un déflecteur pour diriger vers l'extérieur de la machine les déchets transportés par la veine d'air.

La machine selon l'invention, peut être soit montée sur un véhicule tracteur ou bien comporter des moyens automoteur. La machine de l'invention fonctionne de la manière suivante :
- Les plantes porteuses de cornichons sont arrachées par l'intermédiaire des tapis ondulés 1a, 1b. Ces tapis doivent être en un matériau présentant la souplesse nécessaire pour éviter d'écraser les cornichons, lorsqu'ils viennent en relation de pressage.
- Les plantes et les cornichons sont alors transférés au poste de secouage constitué par les deux éléments oscillants 2a, 2b définissant un canal de secouage qui est animé d'un mouvement oscillatoire autour d'une position médiane inclinée vers le sol. Les plantes avec leurs cornichons, introduites en (a) dans ce canal, selon la flèche f2, subissent alors un effet de secouage avant de parvenir à la sortie (b). Les plantes tombent alors sur le sol, tandis que les cornichons, détachés par les secousses, traversent la grille délimitée par les battes 3b de l'élément inférieur 2b et les passages latéraux, et s'écoulent par gravité vers le poste de transfert où le tapis 7 coopère avec la trémie 8 à capitonnage interne. Au-dessus de l'extrémité aval du tapis 7, les feuilles et autres déchets sont éliminés par la veine d'air générée par l'aspirateur broyeur ou par le ventilateur.

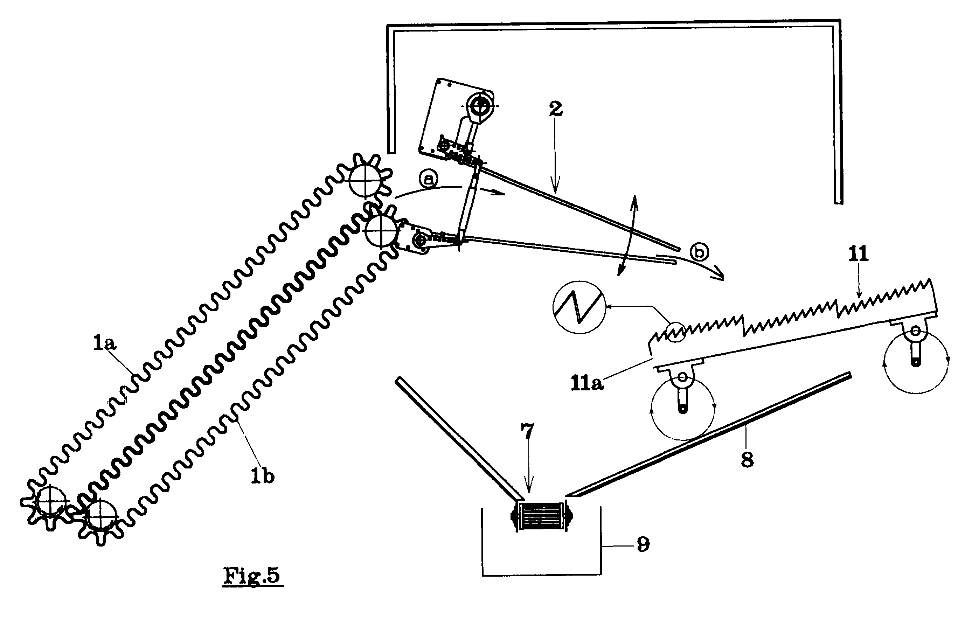

Dans la forme de réalisation précédemment présentée, les plantes à la sortie (b) du canal de secouage, tombent directement sur le sol. Selon une seconde forme de réalisation (fig.5), la machine est équipée d'un dispositif de triage 11 disposé sous la sortie (b) du canal de secouage, pour reprendre la végétation avant qu'elle ne tombe sur le sol et pour séparer des plantes les cornichons détachés des plantes par le système de secouage précédemment décrit, mais encore présents dans la masse de la végétation. Ce dispositif de triage, au moins en partie, est disposé au dessus du poste de transfert 7 et de préférence au dessus de la trémie 8. A titre d'exemple purement indicatif, le dispositif de triage pourra être constitué par un organe secoueur du type de celui utilisé dans les machines moisonneuses-batteuses pour extraire de la paille les derniers grains qui y subsistent encore. Cet organe secoueur est constitué par un caisson incliné dont la paroi supérieure forme un crible ajouré pour le passage des cornichons dans le volume interne du caisson et présente une succession de pentes pourvues de crans. Le caisson, en extrémité la plus basse, présente une ouverture 11a d'évacuation des cornichons vers la trémie 8. Le secoueur est animé d'un mouvement d'oscillations longitudinales et à cet effet est monté par chacune de ses extrémités sur le maneton d'un vilebrequin. Ce vilebrequin est en prise avec un organe moteur. Avantageusement sont prévus plusieurs secoueurs disposés côte à côte et solidaires des manetons d'un même vilebrequin avant et des manetons d'un même vilebrequin arrière. Les manetons de chaque vilebrequin sont décalés angulairement de l'un à l'autre en sorte que les mouvements d'oscillations des secoueurs soit déphasés.

Grâce à la machine de l'invention se trouve résolu le problème posé par la récolte des cornichons avec un ramassage et un traitement simultanés des plantes porteuses. De plus la machine telle que décrite présente un rendement de récolte en ce qui concerne notamment les cornichons de petit calibre nettement supérieur à celui obtenu avec les machines de l'art antérieur.

Bien que l'invention soit appliquée, dans le mode de réalisation précité, à la récolte des cornichons, il est clair que la machine de l'invention peut servir pour la récolte de fruits portés par différentes plantes.

Il va de soi que la présente invention peut recevoir tous aménagements et variantes sans pour autant sortir du cadre du présent brevet.

## Revendications

1. Machine pour la récolte de fruits ronds ou oblongs, portés par des plantes par exemple des cornichons, en se débarrassant simultanément de la plante porteuse, cette machine comportant un poste d'arrachage des plantes porteuses et de transfert de ces dernières à un poste de secouage des plantes arrachées, caractérisée en ce que le poste de secouage comporte un élément oscillant supérieur (2a) coopérant avec un élément oscillant inférieur (2b) qui définissent un canal de secouage, et que ce canal de secouage est animé par au moins un moyen d'actionnement (4), d'un mouvement oscillant autour d'une position médiane inclinée vers le sol, l'élément oscillant inférieur (2b) étant agencé de façon à délimiter un certain nombre d'orifices d'évacuation des fruits, par exemple des cornichons.

2. Machine selon la revendication 1, caractérisée en ce que le poste d'arrachage est constitué de deux tapis ondulés (1a), (1b) en relation de pressage l'un par rapport à l'autre et montés chacun sur des chaînes sans fin, actionnées par des moyens moteur, ces tapis étant réglés de façon à saisir les plantes tout en évitant d'endommager les fruits qu'elles portent.

3. Machine selon l'une quelconque des revendications précédentes, caractérisée en ce que les axes d'oscillation (6a), (6b) des éléments oscillants (2a), (2b) se trouvent chacun dans un plan parallèle au sol.

4. Machine selon l'une quelconque des revendications précédentes, caractérisée en ce que le canal délimité par les éléments oscillants supérieur (2a) et inférieur (2b) présente une inclinaison vers le sol en position médiane.

5. Machine selon l'une quelconque des revendications précédentes, caractérisée en ce que le canal délimité par les éléments oscillants supérieur (2a) et inférieur (2b) est plus large à l'entrée (a) qu'à la sortie (b).

6. Machine selon l'une quelconque des revendications 1 à 5, caractérisée en ce que les éléments oscillants supérieur (2a) et inférieur (2b) sont constitués respectivement de battes (3a), (3b), au moins la rangée de battes inférieures (3b) définissant une grille dont l'écartement entre battes est déterminé pour que les cornichons s'écoulent par gravité vers un poste de transfert (7).

7. Machine selon l'une quelconque des revendications 1 à 6, caractérisée en ce que les éléments oscillants (2a), (2b) sont articulés au bâti de la machine et sont actionnés en oscillation par l'intermédiaire d'au moins un mécanisme moteur (4) d'actionnement comprenant un élément à déplacement alternatif 4b, solidarisé par une articulation à l'un des éléments oscillants, l'élément oscillant inférieur (2b) étant accouplé à l'élément oscillant supérieur (2a) par un bras de transmission (5).

8. Machine selon la revendication 7, caractérisée en ce que les points d'articulation des éléments oscillants (2a), (2b) au bâti de la machine et les points d'articulation du bras de transmission (5) audits éléments oscillants forment un trapèze isocèle déformable.

9. Machine selon la revendication 7 ou la revendication 8, caractérisée en ce que l'élément à déplacement alternatif (4b) du mécanisme d'actionnement (4) de l'élément oscillant supérieur (2a) et le bras de transmission (5), entre les deux éléments oscillants (2a), (2b) sont tous deux ajustables en longueur de façon à permettre le réglage de l'inclinaison de l'axe longitudinal du canal selon la position médiane et le réglage de la valeur de l'écart minimal entre les extrémités avant des éléments oscillants 2a et 2b.

10. Machine selon l'une quelconque des revendications 7 à 9 caractérisée en ce que :
- la distance entre l'axe de pivotement de l'élément oscillant supérieur (2a) et l'articulation de l'élément à déplacement alternatif (4b) à l'élément oscillant supérieur (2a) est ajustable afin de régler tant l'amplitude du mouvement d'oscillation dudit élément (2a) que sa vitesse et son accélération,
- la distance entre l'axe d'oscillation de l'élément oscillant supérieur (2a) et l'articulation du bras de transmission (5) audit élément oscillant supérieur (2a) d'une part et la distance entre l'axe d'oscillation de l'élément oscillant inférieur (2b) et le point d'articulation du bras de transmission (5) audit élément oscillant inférieur sont ajustables, afin de régler l'amplitude du mouvement oscillant de l'élément oscillant inférieur (2b) ainsi que sa vitesse et accélération.

11. Machine selon l'une quelconque des revendications 6 à 10, caractérisée en ce que les battes (3a), (3b) des éléments oscillants inférieur (2b) et supérieur (2a), sont orientées dans le sens de la progression des plantes dans le canal, tandis que les battes (3b) de l'élément oscillant inférieur (2b), sont suffisamment resserrées pour retenir les plantes et suffisamment écartées pour permettre le passage des cornichons.

12. Machine selon l'une quelconque des revendications 6 à 11, caractérisée en ce que les battes (3a), (3b) se développent chacune de manière rectiligne.

13. Machine selon l'une quelconque des revendications 6 à 11, caractérisée en ce que les battes (3b), et/ou (3a), présentent chacune deux tronçons rectilignes réunis par une pliure, l'angle saillant formé étant orienté vers l'intérieur du canal de secouage.

14. Machine selon l'une quelconque des revendications 6 à 11 caractérisée en ce que les battes (3a), (3b) sont curvilignes.

15. Machine selon l'une quelconque des revendications précédentes caractérisée par un dispositif de triage (11) disposé sous la sortie (b) du canal de secouage, pour reprendre la végétation avant qu'elle ne tombe sur le sol et pour séparer des plantes, les cornichons encore présent dans la masse de la végétation.

## Patentansprüche

1. Maschine zum Ernten von runden oder länglichen Früchten, die von Pflanzen getragen werden, z.B. Gurken, wobei gleichzeitig die Trägerpflanze geerntet wird und die Maschine eine Station zum Ernten der Trägerpflanze und zu deren Transfer zu einer Schüttelstation für die abgeernteten Pflanzen umfaßt, dadurch **gekennzeichnet,** daß die Schüttelstation ein oberes oszillierendes Element (2a) aufweist, welches mit einem unteren oszillierenden Element (2b) zusammenwirkt, wobei diese Elemente einen Schüttelkanal bilden, und daß der Schüttelkanal von mindestens einem Antriebsmittel (4) zu einer oszillierenden Bewegung um eine mittlere, zum Boden geneigte Position angeregt wird, wobei das untere oszillierende Element (2b) derart angeordnet ist, daß es eine bestimmte Anzahl von Öffnungen zum Ausgeben von Früchten, z.B. Gurken, begrenzt.

2. Maschine nach Anspruch 1, dadurch **gekennzeichnet,** daß die Erntestation von zwei gewellten Teppichen (1a, 1b) gebildet ist, die in Andrückung aneinandergehalten und jeweils auf endlosen, motorisch angetriebenen Ketten montiert sind, wobei die Teppiche derart gesteuert sind, daß sie die Pflanzen unter Vermeiden einer Beschädigung der von den Pflanzen getragenen Früchte mitnehmen.

3. Maschine nach einem der vorangehenden Ansprüche, dadurch **gekennzeichnet,** daß die Schwenkachsen (6a, 6b) der oszillierenden Elemente (2a, 2b) beide in Ebenen parallel zum Boden liegen.

4. Maschine nach einem der vorangehenden Ansprüche, dadurch **gekennzeichnet,** daß der von den oberen und unteren oszillierenden Elementen (2a, 2b) begrenzte Kanal in seiner Mittelstellung eine Neigung zum Boden aufweist.

5. Maschine nach einem der vorangehenden Ansprüche, dadurch **gekennzeichnet,** daß der von den oberen und unteren oszillierenden Elementen (2a, 2b) begrenzte Kanal an seinem Eintritt (a) größer als an seinem Austritt (b) ist.

6. Maschine nach einem der Ansprüche 1 bis 5, dadurch **gekennzeichnet**, daß die oberen und unteren oszillierenden Elemente (2a, 2b) jeweils von Klöppeln (3a,3b) gebildet sind, wobei mindestens die Reihe der unteren Klöppel (3b) einen Rost bildet, in welchem der Abstand zwischen den Klöppeln so bestimmt ist, daß die Gurken aufgrund ihrer Schwerkraft auf eine Transferstation (7) sich ergießen.

7. Maschine nach einem der Ansprüche 1 bis 6, dadurch **gekennzeichnet,** daß die oszillierenden Elemente (2a, 2b) am Gestell der Maschine angelenkt sind und mittels mindestens eines Antriebsmotormechanismus (4) in oszillierende Bewegung versetzt werden, der ein Bauteil (4b) zur alternativen Verlagerung umfaßt, welches an eines der oszillierenden Elemente angelenkt ist, wobei das untere oszillierende Element (2b) an das obere oszillierende Element (2a) über einen Transmissionsarm (5) angekoppelt ist.

8. Maschine nach Anspruch 7, dadurch **gekennzeichnet,** daß die Anlenkpunkte der oszillierenden Elemente (2a, 2b) an dem Maschinengestell und die Anlenkpunkte des Transmissionsarms (5) an den oszillierenden Elementen ein gleichschenkeliges Trapez bilden.

9. Maschine nach Anspruch 7 oder 8, dadurch **gekennzeichnet,** daß das Bauteil zur alternativen Verlagerung (4b) des Antriebsmotormechanismus (4) für das obere oszillierende Element (2a) sowie der Transmissionsarm (5) zwischen den beiden oszillierenden Elementen (2a, 2b) beide derart in der Länge einstellbar sind, daß sie eine Regelung der Neigung der Längsachse des Kanals bezüglich seiner Mittelstellung und eine Regelung der Größe des minimalen Abstandes zwischen den vorderen Enden der oszillierenden Elemente (2a, 2b) ermöglichen.

10. Maschine nach einem der Ansprüche 7 bis 9, dadurch **gekennzeichnet,** daß
- der Abstand zwischen der Schwenkachse des oberen oszillierenden Elementes (2a) und dem Anlenkpunkt des Bauteils (4b) zur alternativen Verlagerung an dem oberen oszillierenden Element (2a) einstellbar ist, um sowohl die Oszillations-Amplitude dieses oberen Elementes (2a) als auch seine Geschwindigkeit und Beschleunigung zu regeln;
- der Abstand zwischen der Oszillationsachse des oberen oszillierenden Elementes (2a) und dem Anlenkpunkt des Transmissionsarms (5) an diesem oberen oszillierenden Element (2a) einerseits sowie der Abstand zwischen der Oszillationsachse des unteren oszillierenden Elementes (2b) und dem Anlenkpunkt des Transmissionsarmes (5) an diesem unteren oszillierenden Element einstellbar sind, um die Amplitude der Oszillationsbewegung des unteren oszillierenden Elementes (2b) als auch dessen Geschwindigkeit und Beschleunigung zu regeln.

11. Maschine nach einem der Ansprüche 6 bis 10, dadurch **gekennzeichnet,** daß die Klöppel (3a, 3b) der oszillierenden unteren und oberen Elemente (2b, 2a) im Sinne des Fortschreitens der Pflanzen in dem Kanal orientiert sind, wobei die Klöppel (3b) des unteren oszillierenden Elementes (2b) ausreichend eng beieinander angeordnet sind, um die Pflanzen zurückzuhalten, und ausreichenden Abstand haben, um die Gurken durchzulassen.

12. Maschine nach einem der Ansprüche 6 bis 11, dadurch **gekennzeichnet,** daß die Klöppel (3a, 3b) geradlinig ausgebildet sind.

13. Maschine nach einem der Ansprüche 6 bis 11, dadurch **gekennzeichnet,** daß die Klöppel (3b) und/oder (3a) beide durch einen Falz verbundene, geradlinige Teilabschnitte aufweisen, deren Auskragwinkel zum Inneren des Schüttelkanales hin gerichtet sind.

14. Maschine nach einem der Ansprüche 6 bis 11, dadurch **gekennzeichnet,** daß die Klöppel (3a, 3b) krummlinig ausgebildet sind.

15. Maschine nach einem der vorangehenden Ansprüche, **gekennzeichnet**durch eine Aussonderungs-Vorrichtung (11), welche unterhalb des Ausgangs (b) des Schüttelkanales angeordnet ist, um das ausgeworfene Gelege aufzunehmen, damit es nicht auf den Boden fällt, und um die Pflanzen von den noch vorhandenen Gurken in der Masse des Geleges zu trennen.

## Claims

1. Machine for harvesting round or oblong fruit, borne by plants for example gherkins, while simultaneously getting rid of the bearing plant, this machine comprising a station for lifting the bearing plants and transferring the latter to a station for shaking the lifted plants, characterised in that the shaking station comprises an upper oscillating member (2a) co-operating with a lower oscillating member (2b), which define a shaking channel, and that this shaking channel is driven by at least one actuating means (4), with an oscillating movement about a median position sloping towards the ground, the lower oscillating member (2b) being arranged so as to delimit a certain number of orifices for removing the fruit, for example gherkins.

2. Machine according to Claim 1, characterised in that the lifting station is constituted by two undulating mats (1a), (1b) in a pressing relationship one to the other and each mounted on endless belts, actuated by motor means, these mats being set so as to grasp the plants while avoiding damage to the fruit that they bear.

3. Machine according to any one of the preceding claims, characterised in that the oscillation axes (6a), (6b) of the oscillating members (2a), (2b) are each located in a plane parallel to the ground.

4. Machine according to any one of the preceding claims, characterised in that the channel delimited by the upper (2a) and lower (2b) oscillating members slopes towards the ground in the median position.

5. Machine according to any one of the preceding claims, characterised in that the channel delimited by the upper (2a) and lower (2b) oscillating members is wider at the inlet (a) than at the outlet (b).

6. Machine according to any one of Claims 1 to 5, characterised in that the upper (2a) and lower (2b) oscillating members are constituted respectively by beaters (3a), (3b), the row of lower beaters (3b) at least defining a grid, in which the spacing between beaters is determined so that the gherkins flow by gravity towards a transfer station (7).

7. Machine according to any one of Claims 1 to 6, characterised in that the oscillating members (2a), (2b) are articulated to the frame of the machine and are actuated in oscillation via at least one actuating motor mechanism (4) comprising an alternating-displacement member 4b, firmly attached by an articulation to one of the oscillating members, the lower oscillating member (2b) being coupled to the upper oscillating member (2a) by a transmission arm (5).

8. Machine according to Claim 7, characterised in that the articulation points of the oscillating members (2a), (2b) to the frame of the machine and the articulation points of the transmission arm (5) to said oscillating members form a deformable isosceles trapezium.

9. Machine according to Claim 7 or Claim 8, characterised in that the alternating-displacement member (4b) of the actuation mechanism (4) for the upper oscillating member (2a) and the transmission arm (5) between the two oscillating members (2a), (2b) are both adjustable lengthways so as to permit the setting of the slope of the longitudinal axis of the channel according to the median position and the setting of the value for the minimum distance between the front ends of the oscillating members 2a and 2b.

10. Machine according to any one of Claims 7 to 9 characterised in that:
- the distance between the axis of pivoting of the upper oscillating member (2a) and the articulation of the alternating-displacement member (4b) to the upper oscillating member (2a) is adjustable in order to set both the amplitude of the oscillation movement of said member (2a) and its speed and acceleration,
- the distance between the axis of oscillation of the upper oscillating member (2a) and the articulation of the transmission arm (5) to said upper oscillating member (2a) on the one hand and the distance between the axis of oscillation of the lower oscillating member (2b) and the point of articulation of the transmission arm (5) to said lower oscillating member are adjustable, in order to set the amplitude of the oscillating movement of the lower oscillating member (2b) as well as its speed and acceleration.

11. Machine according to any one of Claims 6 to 10, characterised in that the beaters (3a), (3b) of the lower (2b) and upper (2a) oscillating members are oriented in the direction of the progress of the plants within the channel, whilst the beaters (3b) of the lower oscillating member (2b) are sufficiently tight to retain the plants and sufficiently spaced apart to allow the gherkins to pass through.

12. Machine according to any one of Claims 6 to 11, characterised in that the beaters (3a), (3b) are each developed in a rectilinear manner.

13. Machine according to any one of Claims 6 to 11, characterised in that the beaters (3b), and/or (3a), each have two rectilinear sections connected by a bend, the projecting angle formed being oriented towards the inside of the shaking channel.

14. Machine according to any one of Claims 6 to 11 characterised in that the beaters (3a), (3b) are curvilinear.

15. Machine according to any one of the preceding claims characterised by a sorting device (11) arranged under the outlet (b) of the shaking channel, to catch the vegetation before it falls on the ground and to separate from the plants the gherkins still within the mass of vegetation.
